# EUROPEAN PATENT APPLICATION

(11) **EP 1 560 132 A2**
(43) Date of publication of application: **03.08.2005**
(21) Application number: 05100536.1
(22) Date of filing: 27.01.2005
(51) Int. Cl.: G06F 17/30

(54) **Synchronizing and consolidating information from multiple source systems of a distributed enterprise information system**

(30) Priority: 28.01.2004 US 767381
(71) Applicant: Sun Microsystems, Inc., Santa Clara, California 95054 (US)
(72) Inventor: Mathew, Ashwin J., Bangalore Karnataka (IN); Tripathi, Amit P., 211006 Allahabad (UP) (IN)
(74) Representative: Weihs, Bruno

(57) **Abstract**

Methods and systems for synchronizing and consolidating information from multiple source systems within a metadirectory system. The metadirectory contains peers such as adapters and join engines which may communicate in a peer-to-peer fashion. Adapters are associated with source systems and broadcast data changes. Join engines have specifications for combining data types to generate other data types and may request data from adapters. Special communication channels may be dedicated to data types and/or to query respomes to join engines. The system scales well both horizontally and vertically without a centralized server.

## Description

### BACKGROUND OF THE INVENTION

### FIELD OF THE INVENTION

Embodiments of the present invention relate to communicating information among multiple source systems e.g., of an enterprise information system. More particularly, embodiments of the present invention relate generally to synchronizing and/or consolidating information from multiple source systems of an enterprise information system.

### RELATED ART

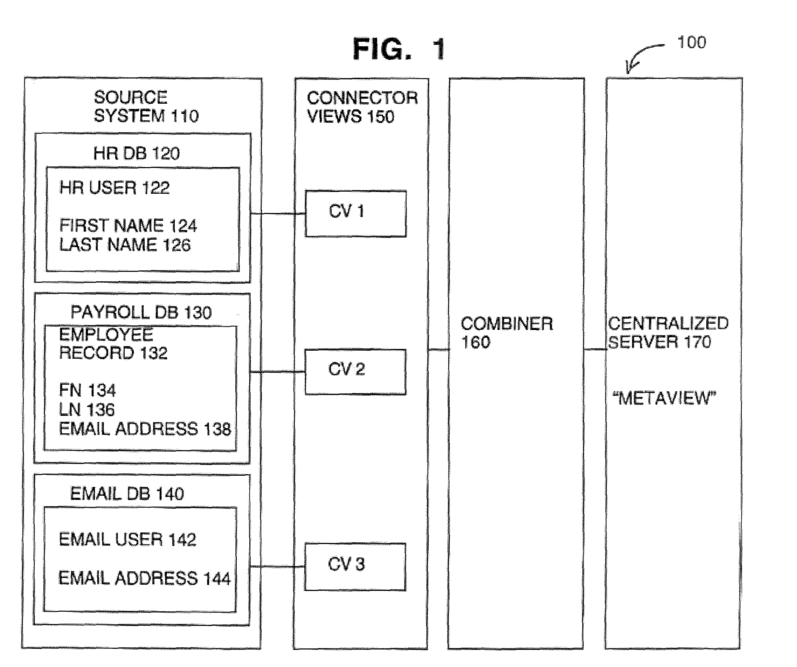

Typically source systems, such as databases (DBs), web servers etc., of an enterprise information system (EIS) have been used for storing and maintaining information. This information may be stored and maintained in the source systems by associating the information with data types. For example, referring to FIG. 1, HR user 122, email user 142, and employee record 132 are examples of data types for which information (values for 124, 126, 144, 134, 136, 138) may be stored and maintained in source systems 110. More specifically, HR user 122 may be used for storing and maintaining the first name 124 and last name 126 of a person. Similarly, an email user 142 may be used for storing and maintaining the email address 144 of a person, while an employee record 132 may be used for storing and maintaining the first name 134, last name 136, and email address 138 for a person.

The data types may be stored and maintained in separate source systems 110. For example, the information associated with the HR user 122 may be stored and maintained in an HR database (DB) 120 while the information associated with the email user 142 may be stored and maintained in an email DB 140. Similarly, the information associated with employee record 132 may be stored and maintained in a payroll DB 130.

The modification of information associated with particular data types may impact information associated with other data types, thus, the information in the different data types which may reside in different source systems 110 may need to be synchronized. For example, an instance of HR user 122 in HR DB 120, an instance of employee record 132 in payroll DB 130, and an instance of email user 142 in email DB 140 may all store information for a particular person. In this case, if the last name 126 of the HR user 122 is modified from "Montgomery" to "Eichstaedt," for example, the employee record 132 and the email user 142 for the particular person may also need to be modified to reflect the change in name (referred to hereinafter as "synchronization").

FIG. 1 depicts one prior art approach to synchronizing information associated with various data types using a centralized server 170. Novell Dir XML, SunONE Metadirectory 5, IBM Directory Integrator, WebMethods, SunONE Integration Server, and BEA Weblogic Integration are examples of products that provide synchronization and consolidation of information that is stored and maintained in different source systems using a centralized server architecture similar to that depleted in FIG. 1.

In a centralized server archilecture, modified information is communicated from the source systems 110, which store and maintain information, to the centralized server 170 using connector views 150, which are associated with the source systems 110, to the combiner 160. The combiner 160 determines what data types may be impacted by modified information. The centralized server 170 stores and maintains information for all of the data types from all of the source systems 110 associated with the enterprise information system 100; thus, centralized server 170 may be used for providing a "metaview", which combines all the information that is stored and maintained in the source systems 110.

Continuing the example, although HR DB 120 may have an instance of the HR user 122, payroll DB 130 may have an instance of employee record 132, and email DB 140 may have an instance of email user 142 for the particular person, the centralized server 170 may also have values for the union of attributes (e.g., first name, last name, email address) for the particular person. Assuming, that HR DB 120 only includes an instance of HR user 122, payroll DB 130 only includes an instance of employee record 132, and email DB 140 only includes an instance of email user 142 for the particular person, then the, "metaview" may include the value (e.g., "Cheryl") of first name 172, the value (e.g., "Montgomery") of last name 174, and the value (e.g., "Cheryl.Montgomery@sun.com") of the email address 176 for the particular person, thus, the "metaview" provides a way of seeing all the information that is stored and maintained in the source systems 110.

When modified information is communicated to the centralized server 170, the information is stored in the centralized server 170 and communicated back to the source systems 110, which may need to synchronize the information based on the modification. The information may be communicated from the centralized server 170 to the source systems 110 through the combiner 160 and the connector views 150.

Continuing the example of a particular person's last name being modified from "Montgomery" to "Eichstaedt," the last name 126, LN 136, and last name 174 may need to be updated for the particular person in the source systems 110 and the centralized server 170. Similarly, assuming that email address is formed, for example, as a concatenation of first name "." last name "@sun.com," the values of the email addresses (138, 144) associated with the email user 140 and employee record 132 may also need to be updated in the source system 110 and the centralized server 170.

In this case, assume that the last name 126 of HR user 122, which is stored in HR DB 120, is first modified from "Montgomery" to "Eichstaedt." The new value (e.g., "Eichstaedt") for last name 126 may be communicated to the connector view CV1, which is associated with HR DB 120. CV 1 in turn communicates the new value to the combiner 160, which determines that the employee record 130 and the email user 140 may he impacted. The old value (e.g., "Montgomery") for the last name 174 in centralized server 170 is replaced with the new value (e.g., "Eichstaedt") for the last name 126 of HR user 122. Similarly, the value of email address 176 is also modified in the centralized server 170.

Although the centralized server 170's information (172, 176) has been synchronized, the source system 110's information (136, 138, 144) has not been synchronized yet. Thus, the modifications to last name 174 and email address 176 are communicated from the centralized server 170 to the combiner 160. The combiner 160 communicates the modifications to the last name 174 and email address 176 to the connector view CV2, which communicates the modifications to payroll DB 130. Payroll DB 130 updates the instance of employee record 132 based on the modifications it receives. Similarly, combiner 160 communicates the modifications of the email address 176 to the connector view CV3, which communicates the modifications to email DB 140. Email DB updates the instance of email user 142 based on the modifications it receives. After all of the synchronizations have been performed, last name 126, LN 136, and last name 179 are set to the value "Eichstaedt." Similarly, email address 138, email address 144, and email address 176 are set to the value "Cheryl.Eichstaedt@sun.com."

The centralized server approach of the prior art has numerous disadvantages. For example, the centralized server 170 becomes a performance bottle-neck as all modifications to information that is stored and maintained in source systems 110 must be communicated to the centralized server 170 in order to perform data synchronization and consolidation. Further, the centralized server architecture of FIG. 1 cannot be scaled horizontally e.g., by adding additional server systems. Instead, the centralized server architecture can only be scaled vertically e.g., by increasing the power of the server system that executes the centralized server 170.

### SUMMARY OF THE INVENTION

Therefore, it would be desirable to provide an architecture for synchronizing and consolidating information that is stored and maintained in different source systems that scales well horizontally and vertically. Further, it would be desirable to provide an architecture for synchronizing and consolidating information that is stored and maintained in different source systems without the requirement of a centralized server that results in a performance bottle neck.

Accordingly, a need exists for a method and system e.g., a "metadirectory system," for synchronizing and consolidating information from multiple source systems. In other words, a method is needed for synchronizing and consolidating information that is stored and maintained in different source systems that scales well horizontally and vertically and does not require a centralized server.

Embodiments of the present invention are directed to a metadirectory system that contains communication channels, source systems, and peer-to-peer devices, e.g., adapters and join engines. Adapters are related to source systems and indicate, e.g., over a communication channel, when a change occurs to a data type of a source system. A communication channel may be associated with a data type. Data change information may be communicated to peers of the system and acted upon by only those peers interested in the information. Join engines are also peers and may contain join specifications. Join engines are able to query source systems for data in response to a data change thereby providing data synchronization features, e.g., data resolution. Also, join engines are capable of performing mapping functions to translate data between recognized formats, e.g., data transformation. Data queries are broadcast over query channels that are specific to a data type. Responses to these queries are broadcast over response channels that may be specific to a join engine. Data change information is broadcast over data change channels and may be specific to a data type. By allowing peers to communicate with each other, the embodiments of the present invention eliminate the need for a centralized server and therefore its associated bottlenecking problems.

Specifically, one embodiment of the present invention provides a method of synchronizing information within a metadirectory. The method provides a first source system that broadcasts information associated with a first data type that is maintained by the first source system. The broadcast information associated with the first data type may be listened for and received by other peers. Additionally, a second source system may synchronize the information associated with the first data type with information associated with a second data type that is maintained by the second source system.

According to one embodiment, the information associated with the first data type is broadcast on a channel that is dedicated to providing the information associated vitth the first data type. Additionally, the information associated with the first data type is listened for and received on the same channel.

According to one embodiment, a join engine listens for and receives the information associated with the first data type. A determination is made, far example using a join specification, as to whether the first data type is related to the second data type. It the first data type is related, to the second data type, the join engine broadcasts the information associated with the first data type, the second source system listens for and receives the information associated with the first data type, and responds by synchronizing the information associated with the first data type with the information associated with the second data type.

According to one embodiment, a join engine determines from a join specification that the first data type is related to a second data type by determining the second data type is a consolidation of information associated with the first data and information associated with a third data type. The join engine may broadcast a query for information associated with the third data type that a third source system listens for. The third source system may respond to the query by providing the information associated with the second data type. The information associated with the second data type may be synchronized with information associated with the first data type by consolidating the information of the first and third data types. Data consolidation may be performed by the join engine. The join engine may broadcast its results over data channels specific to the data types.

According to one embodiment, requested information may be provided using channels that are dedicated to providing the information in response to requests.

### BRIEF DESCRIPTION OF THE DRAWINGS

The accompanying drawings, which are incorporated in and form a part of this specification, illustrate embodiments of the invention and, together with the description, serve to explain the principles of the invention:
FIG. 1 is a block diagram of a prior art method for synchronizing and consolidating information from multiple source systems using a centralized server.
FIG. 2A is a block diagram illustrating a peer-to-peer based enterprise information system 200A for synchronizing information from multiple sources in accordance with embodiments of the present invention.
FIG. 2B is a block diagram illustrating a peer-to-peer based enterprise information system 200B for synchronizing and/or consolidating information from multiple sources in accordance with embodiments of the present invention.
FIG. 3 depicts a flowchart of a method for synchronizing information from multiple source systems according to embodiments of the present invention.
FIG. 4 depicts a data flow diagram for synchronizing and consolidating information from multiple source systems according to embodiments of the present invention.
FIGS. 5A, 5B, AND 5C depict a flowchart of a method for synchronizing and consolidating information from multiple source systems according to embodiments of the present invention.
FIG. 6 is a block diagram of an exemplary computer system upon which an embodiment of the present invention may be practiced.

### DETAILED DESCRIPTION OF THE INVENTION

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be Included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well-known methods, procedures, components, and circuits, have not been described in detail so as not to unnecessarily obscure aspects of the present invention.

### Notation and Nomenclature

Some portions of the detailed descriptions that follow are presented in terms of procedures, logic blocks, processing, and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic information capable of being stored, transferred, combined, compared, and otherwise manipulated in a computer system. It has proven convenient at times, principally for reasons of common usage, to refer to these information as transactions, bits, values, elements, symbols, characters, fragments, pixels, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "redirecting," "mounting," "converting," "opening," "flushing," "suspending," "creating," "pointing," "transmitting," "receiving," "closing," "enabling," "generating," or the like, refer to actions and processes of a computer system or similar electronic computing device. The computer system or similar electronic computing device manipulates and transforms data represented as physical (electronic) quantities within the computer system memories, registers or other such information storage, transmission or display devices.

### FUNCTIONAL AND SYSTEM OVERVIEWS

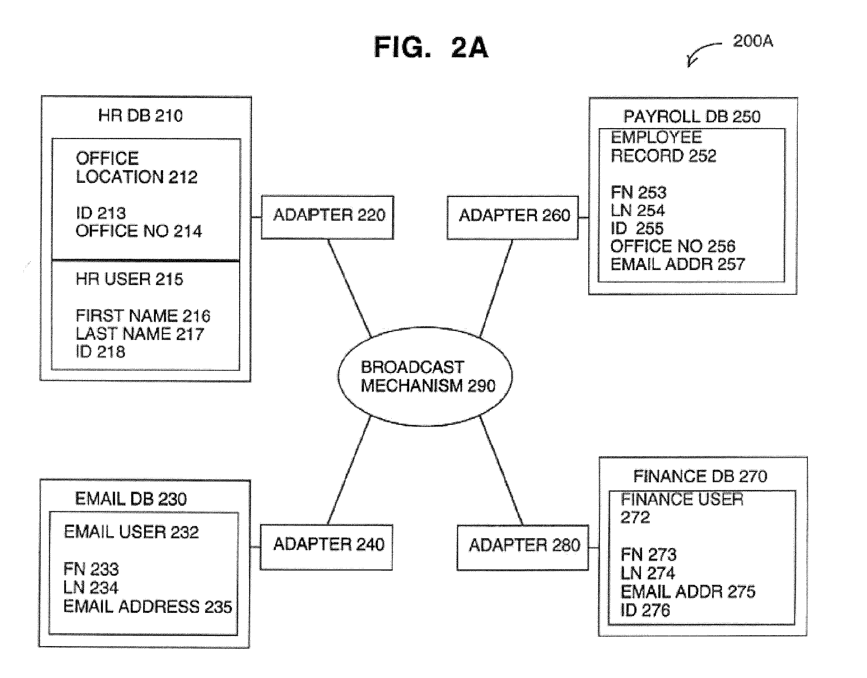

FIG. 2A is a block diagram illustrating a peer-to-peer enterprise information system 200A for synchronizing information from multiple source systems in accordance with embodiments of the present invention. Enterprise information system 200A includes multiple source systems (210, 230, 270, 250), which store and maintain information (values for 216, 217, 218, 233, 234, 235, 273, 274, 275, 276, 213, 253, 254, 255, 256, 257) associated with instances of data types (214, 232, 272, 212, 252). Modifications to the information may be synchronized across instances of related data types by broadcasting the information on the peer-to-peer based broadcast mechanism 290 as well as listening for and receiving the modified information from the broadcast mechanism 290. Broadcasting is a technique that is well known in the art.

In the present embodiment, modified information may be broadcast by adapters (220, 240, 280, 260) that are associated with the source systems (210, 230, 270, 250). Adapters are pears in the peer-to-peer system. Similarly, the adapters (220, 240, 280, 260) may listen for and receive modified information that is broadcast from other peers. In one embodiment, information may be provided, listened for, received, and/or requested on channels that are dedicated to particular data types, as will be described in more detail.

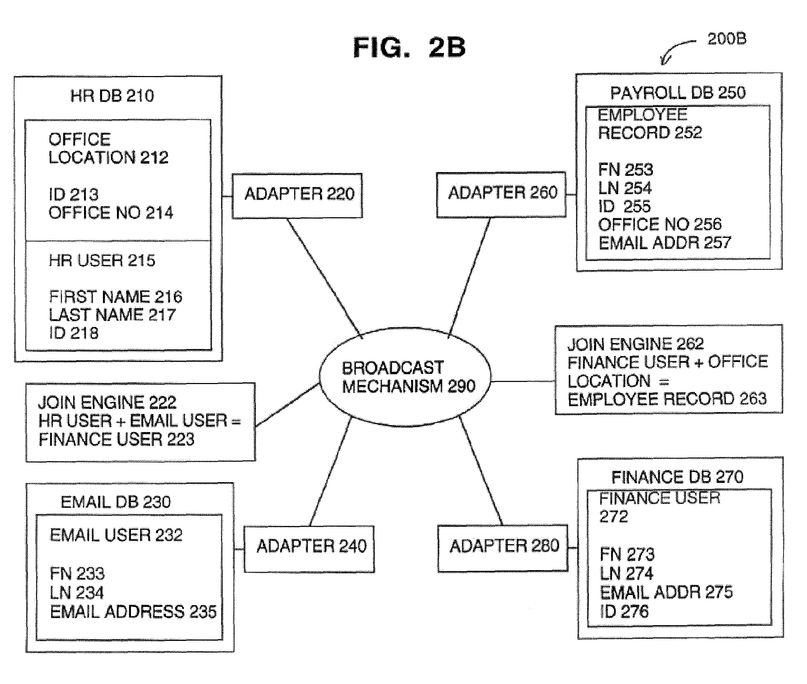

FIG. 2B is a block diagram illustrating a peer-to-peer enterprise information system 200B for synchronizing and/or consolidating information from multiple source systems in accordance with embodiments of the present invention. In this system, peers include join engines as well as adapters. In one embodiment, information associated with one data type may be consolidated with information associated with another date type as a part of synchronizing the information associated with the data types. In the present embodiment, join engines (222, 262) may use join specifications (223, 263) to synchronize information associated with multiple source systems (210, 230, 270, 250) and to perform data transformations. For example, the join specification 223 (e.g., HR user + email user = finance user) indicates that finance user 272 is a consolidation of HR user 215 and email user 232. In other words, finance user 272 includes attributes (FN 273, LN 274, ID 276) that correlate to attributes of HR user 215 (first name 216, last name 217, ID 218) and attributes (email addr 275) that correlate to attributes of email user 232 (email addr 235). If the information associated with either HR user 215 or email user 232 is modified, join engine 222 may use join specification 223 to synchronize the information associated with finance user 272 by obtaining the latest Information for HR user 215 and email user 232 and providing (e.g., through queries) the latest information to finance DB 270. The latest information may be broadcast on the broadcast mechanism 290 using channels and adapters as will be described in more detail. From a functionally perspective, a join engine performs two kinds of tasks: joins, which are consolidations of data from multiple common data types to a single common data type; and splits, which are splits of data from a single common data type to multiple common data types. The following discussions pertain primarily to joins, or data consolidations. It should be understood, however, that the present invention pertains to splits as well.

In the present embodiment, adapters (220, 240, 260, 280) and join engines (222, 262) may be "peers" that communicate using the peer-to-peer broadcast mechanism 290. In one embodiment, adapters and join engines may be implemented as peer processes, which may or may not reside on separate computer systems.

In one embodiment, adapters and join engines may be partitioned. For example, referring to FIGS. 2A and 2B, adapter 220 may, among other things, provide channels dedicated to providing information associated with HR user 215 and office location 212. Adapter 220 may be partitioned into two adapters. In this case, for example, one of the adapters may provide a channel dedicated to providing information associated with HR user 215 and the other adapter may provide a channel for providing information associated with office location 212. Similarly, a join engine that handles two join specification may be partitioned into two join engine where each join engine handles one of the join specifications.

Although FIGS. 2A and 2B depict join engines with one join specification (223, 262), each join engine may handle more than one join specification.

In one embodiment, queries may be associated with requests for information associated with data types, adapters and join engines may obtain the information associated with the data types. For example, a join engine may request information, for example with a query, for a particular data type on a channel that is dedicated to requesting the information. The request may include a query for information for a specific data type. An adapter for a source system, that stores and maintains the information of the requested data type may listen for and receive the request. The query may be executed on the source system to obtain the information. The source system may provide the information to the join engine by broadcasting it on a channel that is dedicated to the join engine that generated the query.

Implementing adapters and join engines as peers allows for distribution of the adapters and join engines across, a set of server systems. Thus, multiple adapters and join engines may reside on the same server system or on separate server systems, depending on load requirements. Thus, a peer architecture, such as that depicted in FIGS. 2A and 2B, may be scaled vertically by increasing the processing power of the server systems on which the adapters and/or join engines reside. Similarly, the architecture may be scaled horizontally by partitioning adapters and join engines and executing the partitioned adapters and join engines on more server systems.

### CHANNELS

In one embodiment, modified information may be broadcast on channels that are dedicated to providing the modified information for a particular data type. Similarly, in one embodiment, modified information may be listened for and received on the channels that are dedicated to providing the modified information. In one embodiment, information associated with data types may be requested, for example on a query channel that is dedicated to the data type of requested information. Similarly, in one embodiment, the requested information may be provided using channels that are dedicated to the peer that requested the information.

According to one embodiment, Java Messaging Services (JMS) topics are used for providing information associated with data types on dedicated channels. In one embodiment, JMS queries are used for requesting and/or providing information associated with data types on dedicated channels. Queries are performed via a broadcast mechanism for which a JMS topic associated with a specific data type would be used. Query responses are returned to the query requestor (a join engine) via a JMS queue associated with the query requestor.

### DATA TYPES

In one embodiment, data types may be any structure that may be used for storing and maintaining values with a source system. In one embodiment, a source system may be a database, the data types may be tables, and instances of the data types may be rows of the table. In this case, attributes, such as HR user 214's first name 216, last name 217, and ID 218, may be columns of the table and values, such as the first name "Cheryl" and the last name "Eichstaedt," may be stored in data cells under the appropriate columns. In one embodiment a source system may be an object oriented database, the data types may be object classes, the attributes of the data types may be attributes of the object classes, and the instances of the data types may be objects that are associated with the object classes.

### CONSOLIDATED VIEWS

Although the present embodiment does not depict a centralized server 170 for storing and maintaining a "metaview" that includes values for all of the information associated with the source systems, users may still be interested accessing the values for all of the information associated with the source systems. In one embodiment, "consolidated views" provide users with the ability to access the values for all of the information associated with the source systems, however, the "consolidated views" may be implemented in a way that works with a peer architecture. Referring to FIG. 2B, for example, join engines (222, 262) with join specifications (223, 262) indicate how information associated with various data types (215, 232, 272, 212) may be consolidated to provide "consolidated views" (e.g., finance user 272, employee, record 252). For example, in the present embodiment, join specification 263 indicates that employee record is a consolidation of finance user and office location, thus, employee record 252 may be a "consolidated view" of finance user 272 and office location 212. More specifically, employee record 252 may include attributes (FN 253, LN 254, email addr 257, ID 255) that correspond to attributes associated with finance user 272 (FN 273, LN 274, email addr 275, ID 276) and attributes (ID 255, office no 214) that correspond to attributes associated with office location 212 (ID 213, office no 214). The data type that results from a data consolidation be broadcast from the join engine a data channel specific to that data type.

### GLOBAL ATTRIBUTE MAPPING DATA

In one embodiment, global attribute mapping data may be used to determine the interrelationship of attributes. For example, if the value of the HR user 214's last name 217 is modified, email user 232's LN 234 may need to be synchronized based on the modification. In this case, global attribute mapping data may indicate that HR user 214's last name 217 is related to email user 232's LN 234. In one embodiment, a notation such as "HR user. last name = email user.LN" may be used to indicate that email user 232's LN 234 may be impacted by a modification to HR user 214's last name 217 or vice versa.

Similarly, email user 232's email addr 235 may also need to be Synchronized, for example, if the email addr 235 is formed by concatenating first name "." last name "@sun.com." In this case, global attribute mapping data may indicate that email user 232's email addr 235 is a concatenation of HR user 214's first name 216, HR user 214's last name 217, "@sun.com." In one embodiment, a notation such as "HR user.first name + HR user.last name = email user.email addr" may be used to indicate that email user's email addr 235 may be impacted by a modification to either HR user 214's first name 216 or HR user 214's last name 217 or vice versa. For more information on global attribute mapping data, refer to patent application serial no. xx/xxx,xxx (attorney docket no. P030020) entitled "Global Attribute Mapping Data in a Distributed Enterprise Information System" by inventors Ashwin J. Mathew and Amit P. Tripathi filed the same day herewith, the contents of which are incorporated herein.

### AN OPERATIONAL EXAMPLE OF SYNCHRONIZING

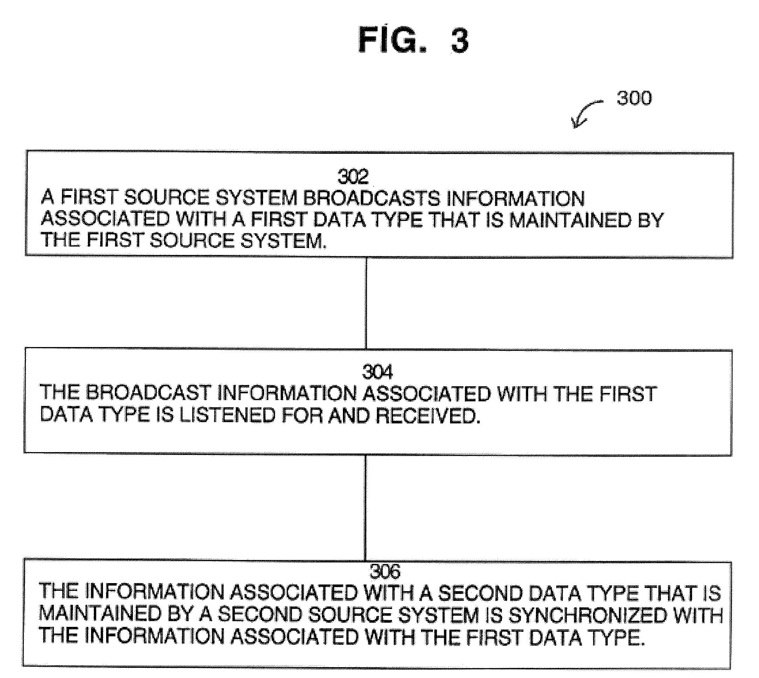

FIG. 3 depicts a flowchart for a method of synchronizing information from multiple source systems according to embodiments of the present invention. Although specific steps are disclosed in flowchart 300, such steps are exemplary. That is embodiments of the present invention are well suited to performing various other steps or variations of the steps recited in flowchart 300. It is appreciated that the steps in flowchart 300 may be performed in an order different than presented, and that not all of the steps in flowchart 300 may be performed. All of, or a portion of, the embodiments described by flowchart 300 can be implemented using computer-readable and computer executable instructions which reside, for example, in computer-usable media of a computer system or like device. In the present embodiment, steps depicted in flowchart 300 may be implemented by the system 200A of FIG. 2A.

For the purposes of illustration, the discussion of flowchart 300 shall refer to the structures depicted in FIG. 2A.

As depicted in FIG. 2A, several data types are related, for example, when the value of an attribute in one data type is modified, the values of attributes in the other data types may need to be synchronized to reflect the modification. For example, if the value of the HR user 214's last name 217 is modified, email user 232's LN 234 may need to to be synchronized based on the modification. Similarly, email user 232's email addr 235 may also need to be synchronized, for example, if the email addr 235 is formed by concatenating first name "." last name "@sun.com." In one embodiment, global attribute mapping data may be used to determine that LN 234 and email addr 235 may need to be synchronized with modifications to last name 217.

In the following description, assume that a woman has married and her last name has been changed from "Montgomery" to "Eichstaedt." As a result attributes (217, 234, 235, 274, 254) of various data types may need to be synchronized to reflect the change of her last name.

Referring to FIG. 3, in step 302, a first source system broadcasts information associated with a first data type that is maintained by the first source system. For example, referring to FIG. 2A, HR DB 210 maintains information (values for 216, 217, 218) associated with HR user 214. If the value of HR user's last name 217 is modified from "Montgomery" to "Eichstaedt," the adapter 220 associated with HR user 214 may broadcast the information (values for 216, 217, 218) on the broadcast mechanism 290 using a channel that is dedicated to providing the information (values for 215, 217, 218) for this data type, e.g., HR user 214.

In step 304, the broadcast information associated with the first data type is listened for and received by other peers interested in this data type. For example, still referring to FIG. 2A, since a modification to HR user 214 may impact email user 232, the adapter 240 associated with email DB 230 may be listening on the channel that is dedicated to providing the information (values for 215, 217, 218) for HR user 214. In this case, adapter 240 may receive the broadcast information (values for 214, 217, 218), which includes the new value, e.g., "Eichstaedt," for last name 217.

In step 306, the information associated with a second data type that is maintained by a second source system is synchronized with the information associated with the first data type. For example, still referring to FIG. 2A, email DB 230 may modify email user 232's LN 234 from "Montgomery" to "Eichstaedt." Similarly, email DB 230 may modify email user 232's email addr 235 from "Cheryl.Montgomery@sun.com" to "Cheryl.Eichstaedt@sun.com."

### AN OPERATIONAL EXAMPLE OF SYNCHRONIZING AND CONSOLIDATING

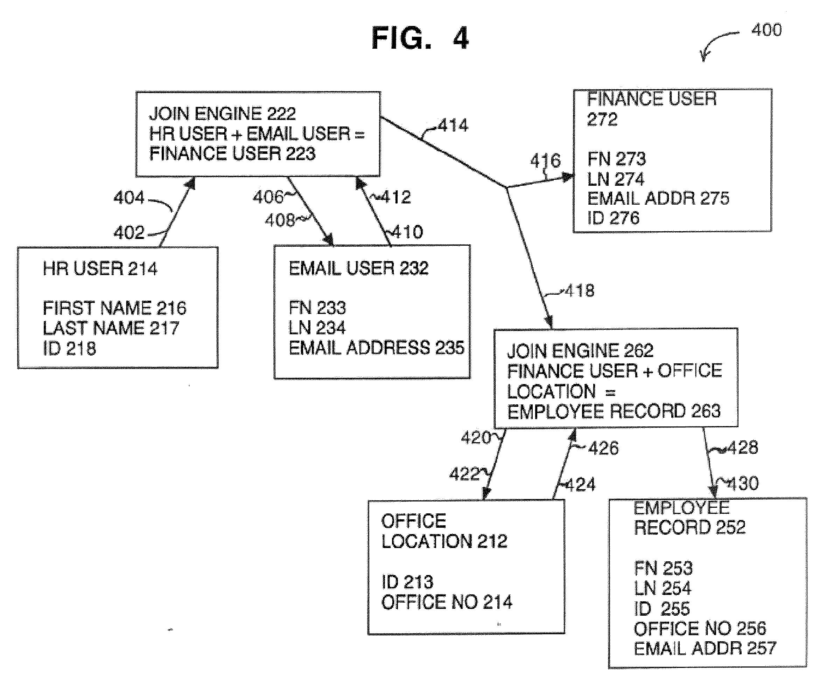

FIG. 4 depicts a data flow diagram diagram for synchronizing and consolidating information from multiple systems according to embodiments of the present invention.

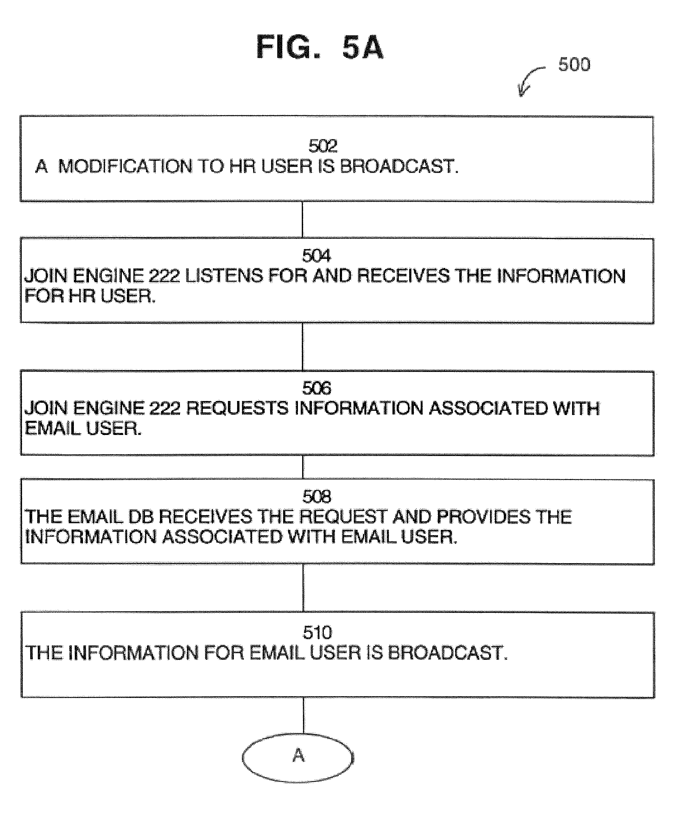

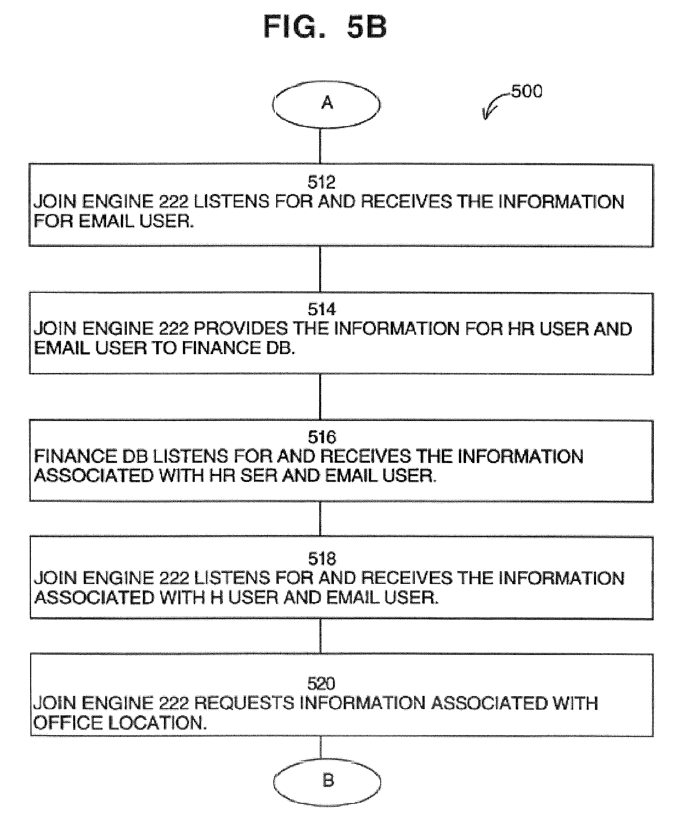

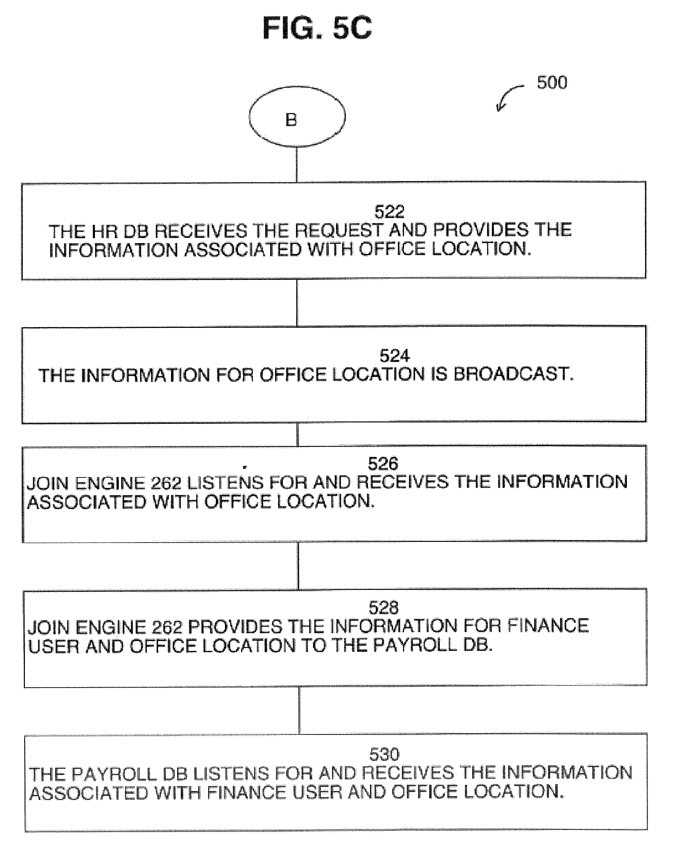

FIGS. 5A, 5B, AND 5C depict a flowchart of a method for synchronizing and consolidating information from multiple source systems according to embodiments of the present invention. The steps disclosed in flowchart 500 describe the data flow diagram 400. Although specific steps are disclosed in flowchart 500, such steps are exemplary. That is embodiments of the present invention are well suited to performing various other steps or variations of the steps recited in flowchart 500. It is appreciated that the steps in flowchart 500 may be performed in an order different than presented, and that not all of the steps in flowchart 500 may be performed. All of, or a portion of, the embodiments described by flowchart 500 can be implemented using computer-readable and computer executable instructions which reside, for example, in computer-usable media of a computer system or like device.

For the purposes of illustration, the discussion of flowchart 500 shall refer to the structures depicted in FIG. 2B. Further, the arrows depicted in FIG. 4 represent communications between the adapters associated with source systems (210, 230, 270, 250) and join engines (222, 262) using broadcast mechanism 290. For example, at 402 the adapter 220 of HA DB 210 may broadcast information on broadcast mechanism 290 associated with the particular data type, e.g., HR user 215, which join engine 222 is listening for and therefore interested in. At 404, join engine 222 listens for and receives the information associated with HR user 215 from broadcast mechanism 290.

As depicted in FIG. 4, several data types are related, for example, when the value of an attribute in one data type is modified, the values of attributes in the other data types may need to be synchronized to reflect the modification. For example, if the value of the HR user 214's last name 217 is modified, email user 232's LN 234, finance user 272's LN 274, and employee record 252's LN 254 may need to be synchronized based on the modification. Similarly, email user 232's email addr 235 may also need to be synchronized, for example, if the email addr 235 is formed by concatenating first name "." last name "@sun.com." In one embodiment, global attribute mapping data may be used to determine that LN 234, LN 274, LN 254 and email addr 235 may need to be synchronized with a modification to last name 217.

In the following description, assume that a woman has married and her last name has been changed from "Montgomery" to "Eichstaedt." As a result values for attributes (217, 234, 235, 274, 254) of various data type need to be synchronized to reflect the change of her last name. Further, the values of attributes (273-276, 253-257) of various data types may need to be consolidated to reflect the change of her last name.

In step 502, a modification to HR user 214 is broadcast (402). For example, a woman gets married and as a result her last name is modified from "Montgomery" to "Eichstaedt." As a result the value of the last name 217 in HR user 214, which resides in HR DB 210, is modified from "Montgomery" to "Eichstaedt." The adapter 220 for HR DB 210, broadcasts to the broadcast mechanism 290 the information for HR User 214 (e.g., the value of first name 216, the value of last name 217, and the value of id 218) on a channel that is dedicated to providing information associated with this data type, e.g., HR User 214.

In step 504, the join engine 222 listens for and receives (404) the information for HR user 214. For example, join engine 222 listens for information for HR user 214 that is broadcast on a channel that is dedicated to providing information associated with HR User 214. The join engine 222 receives (404) the information for HR user 214 and determines based on the join specification 223 (e.g., HR user + email user = finance user) that finance user 272 is related to HR User 214 and Email User 232, thus, finance user 272 may need to be synchronized, for example, by consolidating the information associated with HR user 214 and email user 232 with finance user 272.

In step 506, join engine 222 requests information associated with email user 232. For example, join engine 222 broadcasts a request (406) to retrieve information associated with email user 232. In one embodiment, join engine 222 may broadcast a request that includes, among other things, a query to retrieve email user 232 on a query channel that is dedicated to requesting information associated with this data type, e.g., email user 232.

In step 508, the email DB 230 receives the query request and provides the information associated with email user 232, For example, the adapter 240 for Email DB 230 listens for and receives (408) the request (406) on the channel that is dedicated to requesting information associated with the email user 232. Email DB 230 may execute the query from the request (406) to obtain the information for email user 232, synchronizes the information associated with email user 232 with the modification to HR user 214's last name, and provide the information for email user 232 to adapter 240. The information associated with email user 232 may be synchronized by setting email user 232's LN 234 attribute (e.g., setting LN 234 to the value "Eichstaedt") and updating email user 232's email addr 235 (e.g., setting email addr 235 to the value "Cheryl.Eichstaedt@sun.com") based on the new value of HR user 214's last name.

In step 510, the information for email user 232 is broadcast (410). For example, adapter 240 broadcasts (410) the information (values for 233, 234, 235) for email user 232 on a channel that is dedicated to the join, engine that requested the data. The identity of the join engine may be a part of the query. In one embodiment, channels that are dedicated to providing information in response to a query are dedicated, to responding. to requests from the query issued by the join engine. For example, the channel that is dedicated to providing information for email user 232 may provide the information (values for 233, 234, 235) in response to the request (406) that join engine 222 broadcast.

In step 512, the join engine 222 listens, for and receives (412) the information for email user 232. For example, join engine 222 listens for and receives (412) the information for emall user 232 that adapter 240 broadcast (410) on the that is dedicated to providing the information to join engine 222.

In step 514, join engine 222 provides (414) the information for HR user 214 and email user 232 to finance DB 270 for the potential update of finance user 272. For example, since join engine 222 determined in step 504 that finance user 272 may need to be consolidated, join engino 222 broadcasts (414) the information (values for 216, 217, 218) for HR user 214 and the information (values for 233, 234, 235) for email user 232 on a channel that is dedicated to providing information (values for 216, 217, 218, 233, 234, and/or 235) that may impact finance user 272.

In step 516, finance DB 270 listens for and receives (416) the information (values for 216, 217, 218, 233, 234, 235) associated with HR user 214 and email user 232. For example, the adapter 280 for finance DB 270 listens for and receives (416) the information associated with HR user 214 and email user 232 on the channel that is dedicated to providing information that may impact finance user 272. In one embodiment, broadcast 414 may trigger the synchronization of finance user 272 with the information (values for 216, 217, 218, 233, 234, and/or 235) associated with HR user 214 and email user 232. Continuing the example, finance DB 270 synchronizes finance user 272 by setting the value of LN 274 to the value from last name 217. In other words, the value of LN 274 is changed from "Montgomery" to "Eichstaedt." Similarly, the value of email address 275 may be changed from "Cheryl.Montgomery@sun.com" to "Cheryl.Eichstaedt@sun.com."

In step 518, join engine 262 also listens for and receives (418) the information associated with HR user 214 and email user 232 that is broadcast (414) on the channel that is dedicated for providing information that may impart finance user 272. Continuing the example, join engine 262 determines that finance user 272 may have been impacted by a modification of either HR user 214 or email user 232. Further, join engine 262 determines based on the join specification 263 (e.g., finance user + office location = employee record) that employee record 252 is related to finance user 214 and office location 263, thus, employee record 252 may need to be synchronized, for example, by consolidating the information associated finance user 272 and office location 212.

From a functionality perspective, a join engine performs two kinds of tasks: joins, which are consolidations of data from multiple common data types to a single common data type; and splits, which are splits of data from a single common data type to multiple common data types. For example, if a modification occurs to Finance User 272, e.g., FN 273 changes, this will serve as input to both Join Engine 262 and Join Engine 222. In the instance of Join Engine 262, a join will be performed as indicated. However, in the instance of Join Engine 222, a split will be performed, and the modified value of FN 273 from Finance User 272 will be applied to First Name 216 on HR User 214 and FN 233 on Email User 232.

At step 520, join engine 262 requests (420) information associated with office location 212. For example, in order to consolidate employee record 262, information associated with office location 212 may be obtained. Join engine 262 broadcasts a request (420) or "query" for the information (values for 213, 214) associate with with office location 212 on a query channel that is dedicated to requesting information for office location 212.

In step 522, the HR DB 210 receives the request (422) and provides the information associated with office location 212 on a query response channel associated with join engine 262. For example, the adapter 220 for HR DB 210 listens for and receives the request (422) on the channel that is dedicated join engine 262. The HR DB 210 provides the information (values for 213, 214) associated with the office location 212 to adapter 220. In one embodiment, the request may include a query for obtaining the information for office location 212. HR DB 210 may provide the information associated with office location 212 to adapter 220, for example, by executing the query.

At step 524, the information for office location 212 is broadcast (424). For example, adapter 220 may broadcast (424) the information to join engine 262.

In step 526, the join engine 262 listens for and receives (426) the information for office location 212. For example, join engine 262 may listen for and receive (426) the information for office location 212 that adapter 220 broadcast (424) on the channel that is dedicated to providing the information to join engine 262.

In step 528, the join engine 262 provides (428) the information for finance user 272 and office location 212 to payroll DB 250 for the update of employee record 252. For example, join engine 262 may broadcast (428) the information (values for 273, 274, 275, 276) for finance user 272 and the information (values for 213, 214) for office location 212 on a channel that is dedicated to providing information (values for 273, 274, 275, 276, 213, 214) that may impact employee record 252.

In step 530, payroll DB 250 listens for and receives (430) the information (values for 273, 274, 275, 276, 213, 214) associated with finance user 272 and office location 263. For example, the adapter 260 for payroll DB 250 may listen for and receive (430) the information associated with finance user 272 and office location 263 on the channel dedicated to providing information that may impact employee record 252. In this case, the broadcast (428) may trigger the synchronization of employee record 252 with the provided information (values for 273, 274, 275, 276, 213, 214). For example, the payroll DB 250 may synchronize employee record 252 with the provided information by setting the value of LN 254 with the value of LN 274 and the value of email addr 257 with the value of email addr 275. In this case, LN 254 may be modified from "Montgomery" to "Eichstaedt" and email addr 257 may be modified from "Cheryl.Montgomery@sun.com" to "Cheryl.Eichstaedt@sun.com."

### HARDWARE OVERVIEW

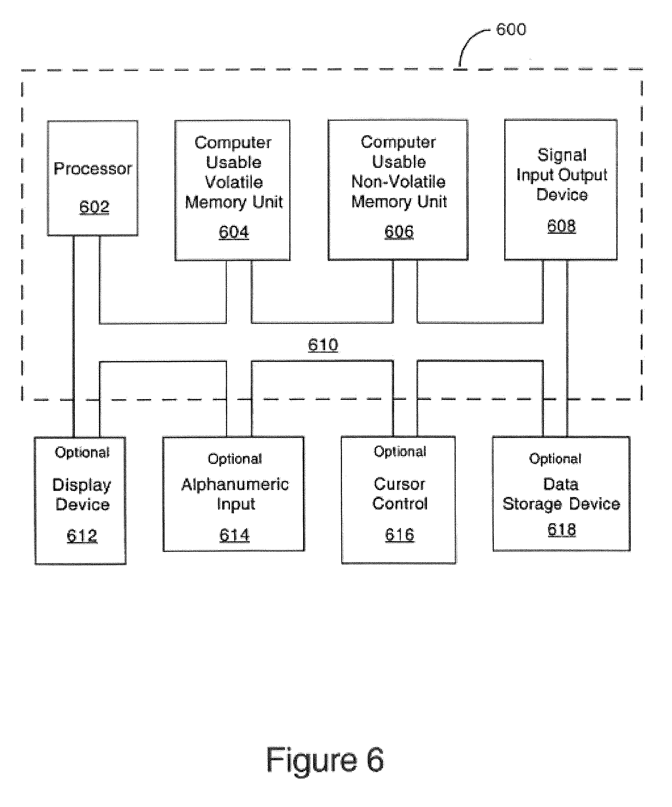

Referring now to Figure 6, embodiments of the present invention are comprised of computer-readable and computer-executable instructions that reside, for example, in computer-useable media of an electronic system, such as a peer system, a host computer system or an embedded system. Refer now to Figure 6, a block diagram of an embodiment of an exemplary computer system 600 used in accordance with embodiments of the present invention that are comprised of computer-readable and computer-executable instructions. These instructions reside, for example, in computer-useable media of an electronic system, such as a peer system, a host computer system or an embedded system. It should be appreciated that system 600 is not strictly limited to be a computer system. As such, system 600 of the present embodiment is well suited to be any type of computing device (e.g., server computer, portable computing device, desktop computer, etc.). Within the following discussions of the present invention, certain processes and steps are discussed that are realized, in one embodiment, as a series of instructions (e.g., software program) that reside within computer readable memory units of computer system 600 and executed by a processor(s) of system 600. When executed, the instructions cause computer 600 to perform specific actions and exhibit specific behavior that is described in detail herein.

Computer system 600 of Figure 6 comprises an address/data bus 610 for communicating information, one or more central processors 602 coupled with bus 610 for processing information and instructions. Central processor unit(s) 602 may be a microprocessor or any other type of processor. The computer 600 also includes data storage features such as a computer usable volatile memory unit 604 (e.g., random access memory, static RAM, dynamic RAM, etc.) coupled with bus 610 for storing information and instructions for central processor(s) 602, a computer usable non-volatile memory unit 606 (e.g., read only memory, programmable ROM, flash memory, EPROM, EEPROM, etc.) coupled with bus 610 for storing static information and instructions for processor(s) 602. System 600 also includes one or more signal generating and receiving devices 608 coupled with bus 610 for enabling system 600 to interface with other electronic devices and computer systems. The communication interface(s) 608 of the present embodiment may include wired and/or wireless communication technology.

Optionally, computer system 600 may include an alphanumeric input device 614 including alphanumeric and function keys coupled to the bus 610 for communicating information and command selections to the central processor(s) 602. The computer 600 can include an optional cursor control or cursor directing device 616 coupled to the bus 610 for communicating user input information and command selections to the central processor(s) 602. The cursor-directing device 616 may be implemented using a number of well known devices such as a mouse, a track-ball, a track-pad, an optical tracking device, and a touch screen, among others. Alternatively, it is appreciated that a cursor may be directed and/or activated via input from the alphanumeric input device 614 using special keys and key sequence commands. The present embodiment is also well suited to directing a cursor by other means such as, for example, voice commands.

The system 600 of Figure 6 may also include one or more optional computer usable data storage devices 618 such as a magnetic or optical disk and disk drive (e.g., hard drive or floppy diskette) coupled with bus 610 for storing information and instructions. An optional display device 612 is coupled to bus 610 of system 600 for displaying video and/or graphics. It should be appreciated that optional display device 612 may be a cathode ray tube (CRT), flat panel liquid crystal display (LCD), field emission display (FED), plasma display or any other display device suitable for displaying video and/or graphic images and alphanumeric characters recognizable to a user.

Referring to FIGS. 2A and 2B, in the present embodiment, the source systems (210, 230, 280, 250) and adapters (220, 240, 270, 250) may be executed on computer systems, such as computer system 600. Similarly, referring to FIG. 2B, the join engines (222, 262) may be executed on computer systems, such as computer system 600.

### CONCLUSION

By providing a network of adapters and join engine as peers and a peer-to-peer communication system, the architecture may be scaled both vertically as well as horizontally.

Adapters may be partitioned by the data that they manage. For example, two adapters may be configured for a single enterprise information system, each managing different data types within the EIS, such as users and purchase orders. Each adapter may be hosted on shared or dedicated server systems, depending on the load requirements. While one adapter may manage one data type in the EIS, one adapter may manage multiple data types the EIS.

Join engines may be partitioned based on the join specifications they are handling. For example, one join engine may handle the join specifications for synchronizing and/or consolidating user information for one set of data types while another join engine may handle the join specifications for synchronizing and/or consolidating information for another set of data types. Specifically, one join engine may handle join specifications for synchronizing and/or consolidating information for HR and email systems into a finance system while another join engine may handle join specifications for synchronizing and/or consolidating information for finance system, HR system, and email system into an employee system.

Adapters and join engines may be implemented as processes. Further, adapters and join engines may be implemented as individual processes or as a part of the same process.

By broadcasting information associated With data types on channels that are dedicated to the data types, adapters and join engines may be distributed as peers. For example, modifications, which include adding, updating, or deleting, to an HR user may be broadcast by an adapter that "hosts" the HR user on a channel that is dedicated to the HR user. Similarly, modification to the HR user may be broadcast by a join engine, which synchronizes and/or consolidates information associated with the HR user with other data types.

By providing a peer-to-peer broadcast mechanism, adapters and join engines may be implemented as peers. For example, the adapters and join engines that are interested in modifications to particular data types may listen for and receive information for particular data types on channels that are dedicated to providing information for the particular data types. Join engines may request information for particular data types on channels that are dedicated to the data type of the requested information. Similarly, join engines may receive information for particular data types on query response channels that are dedicated to providing the information to a particular join engine in response to the join engine requesting the information.

Implementing adapters and join engines as peers, which communicate using a broadcasting mechanism, allows the distribution of the adapters and join engines across a set of server systems. Thus, multiple adapters and join engines may reside on the same server system or on separate server systems, depending on load requirements. Thus, a peer architecture, such as that depicted in FIGS. 2A and 2B, may be scaled vertically by increasing the processing power of the server systems the adapters and/or join engines reside on. Similarly, the architecture may be scaled horizontally by partitioning adapters and join engines and executing the partitioned adapters and join engines on more server systems.

### ALTERNATIVES AND EXTENSIONS

Although the examples described herein refer to modifying the value of an attribute and synchronizing the values of attributes in related data types, modifications of information are not limited to modifying values of attributes. Modifications may include, among other things, deleting and adding of attributes from/to data types as well as deleting and adding instances of data types from/to databases. For example, the deletion of the attribute ID 218 from HR user 214 is an axample of a modification. Similarly, the deletion of the instance of HR user 214 for the person "Cheryl Eichstaedt" from the HR DB 210 is an example of a modification. The synchronization and consolidation of information caused by modifications, such as deletions and additions, may be implemented using techniques described herein. For example, if an instance of HR user 214 for the person "Cheryl Eichstaedt" is deleted from the HR DB 210, related instances of email user 232, finance user 272, office location 212, and employee record 252 for the person "Cheryl Eichstaedt" may also be deleted. Techniques as described herein may be used for deleting the related instances from the source systems (210, 230, 270, 250).

Although the examples described herein depict join specifications as a combination of all of the attributes from two or more data types, a join specification could be a combination of a subset of attributes from two or more data types. For example, join specification 223, as depicted herein, indicates that finance user is thecombination of all the attributes associated with HR user 214 and email user 232. However, a join specification could depict finance user as the combination of HR user.first name + HR user.last name + email user.email addr, thus, in one embodiment, finance user 272 may have few attributes than the union of all the attributes associated with HR user 214 and email user 232.

Although the examples described herein describe broadcasting and receiving all of the information associated with data types, according to one embodiment, only the modified information is broadcast. For example, if the value of HR user 214's last name 217 is modified, only the value of last name 217 is broadcast instead of the values of all of HR user 214's attributes (216, 217, 218).

## Claims

1. A metadirectory system comprising:
a plurality of adapter peers each associated with a respective source system and each for communicating data changes regarding data of defined data types, each adapter peer communicating with other adapter peers in a peer-to-peer fashion;
a first join engine peer for communicating with adapter peers in the peer-to-peer fashion and for combining data from the adapter peers to generate data of defined data types and wherein the first join engine peer is also for performing data transformations regarding data from the adapter peers; and
a first plurality of communication channels for broadcasting data changes from the plurality of adapter peers and for broadcasting the data generated by the first join engine peer, each communication channel of the first plurality of communication channels associated with a particular data type.

2. A metadirectory system as described in Claim 1 wherein the first join engine peer is also for generating queries for data of specific data types and further comprising a second plurality of communication channels for broadcasting the queries and wherein each channel of the second plurality of communication channels is associated with a particular data type.

3. A metadirectory system as described in Claim 2 wherein adapter peers respond to the queries by broadcasting data over one or more communication channels dedicated to responding to the queries of the first join engine peer.

4. A metadirectory system as described in Claim 2 wherein the first join engine peer generates the queries in response to a data change received from an adapter peer.

5. A metadirectory system as described in Claim 4 wherein the data generated by the first join engine peer relates to a third data type comprising a first data type and a second data type and wherein the queries are generated in response to the data change to the first data type and wherein the second data type is supplied in response to the queries.

6. A metadirectory system as described in Claim 1 wherein the plurality of adapter peers are each software processes.

7. A metadirectory system as described in Claim 6 wherein the software processes each operate on a separate server system.

8. A metadirectory system as described in Claim 6 wherein the first join engine peer is a software process.

9. A metadirectory system as described in Claim 1 wherein the data of the defined data types generated by the first join engine poor comprises a consolidated view of data associated with two or more other data types.

10. A metadirectory system as described in Claim 1 further comprising a second join engine peer for communicating with adapter peers and the first join engine peer in the peer-to-peer fashion and for combining data from adapter peers and from the first join engine peer to generate data of defined data bypes and wherein the second join engine peer is also for performing data transformations.

11. A method of communicating data within a metadirectory system, the method comprising:
a) broadcasting a data change of a first data type over a peer-to-peer communication channel dedicated to the first data type, the broadcasting performed by a first adapter peer of a plurality of adapter peers, wherein the first adapter peer is associatad with a source system;
b) listening for the data change at a second adapter peer of the plurality of adapter peers;
c) receiving the data change at a join engine peer and in response thereto the join engine peer generating a query;
d) in response to the query, supplying response data to the query, the response data comprising data of a second data type, the supplying performed by the second adapter peer; and
e) in response to receiving the response data, the join engine peer generating a third data type comprising the first and second data types and broadcasting the third data type over a communication channel dedicated to the third data type.

12. A method as described in Claim 11, further comprising generating queries at the join engine peer for data of specific data types and further comprising a second plurality of communication channels for broadcasting the queries and wherein each channel of the second plurality of communication channels is associated with a particular data type.

13. A method as described in Claim 12, further comprising broadcasting data, at the second adapter peer, over a communication channel dedicated to responding to the query of the join engine peer.

14. A method as described in Claim 12, further comprising generating, at the join engine peer, the query in response, to a data change received from the first adapter peer.

15. A method as described in Claim 14, wherein the plurality of adapter peers are each software processes.

16. A method as described in Claim 15, wherein the software processes each operate on a separate server system.

17. A method as described in Claim 15, wherein the join engine peer is a software process.

18. A method as described in Claim 11, wherein the third data type comprises a composite view of the first and second data types.

19. A method as described in Claim 11, wherein the join engine peer is a first join engine peer and the method further comprising communicating between a second join engine peer with one or more of the plurality of adapter peers and with the first join engine peer in a peer-to-peer fashion for combining data from adapter peers and from the first join engine to generate data of defined data types and wherein the second join engine peer is also for performing data transformations.

20. A computer-usable medium having computer-readable program code embodied therein for causing a computer system to perform a method of communicating data within a metadirectory system, the method comprising:
a) broadcasting a data change of a first data type over a peer-to-peer communication channel dedicated to the first data type, the broadcasting performed by a first adapter peer of a plurality of adapter peers, wherein the first adapter peer is associated with a source system;
b) listening for the data change at a second adapter peer of the plurality of adapter peers;
c) receiving the data change at a join engine peer and in response thereto the join engine peer generating a query;
d) in response to the query, supplying response data to the query, the response data comprising data of a second data type, the supplying performed by the second adapter peer; and
e) in response to receiving the response data, the join engine peer generating a third data type comprising the first and second data types and broadcasting the third data type over a communication channel dedicated to the third data type.
